# EUROPEAN PATENT SPECIFICATION

(11) **EP 2 595 867 B1**
(45) Date of publication and mention of the grant of the patent: **30.08.2017**
(21) Application number: 11809819.3
(22) Date of filing: 08.07.2011
(51) Int. Cl.: B62K 25/02

(54) **VARIABLE DEVICE FOR VARYING CENTRAL AXIS OF WHEEL**
VARIABLE VORRICHTUNG ZUR VERÄNDERUNG DER MITTELACHSE EINES RADES
DISPOSITIF VARIABLE PERMETTANT DE VARIER L'AXE CENTRAL D'UNE ROUE

(30) Priority: 20.07.2010 KR 20100069988
(43) Date of publication of application: 29.05.2013
(73) Proprietor: Kim, Man Seob, Incheon 404-746 (KR)
(72) Inventor: Kim, Man Seob, Incheon 404-746 (KR)
(74) Representative: Patentanwälte Vollmann & Hemmer
(86) International application number: PCT/KR2011/005035
(87) International publication number: WO 2012/011692

(56) References cited:
- WO-A1-2006/046823
- GB-A- 2 331 733
- GB-A- 2 368 319
- US-A- 4 755 005
- US-B1- 6 186 918

## Description

### Technical Field

The present invention relates to a central axis variable device for varying the central axis of a wheel, which simplifies a configuration of the variable device to thereby reduce a production cost and which smoothens an eccentricity control conveniently.

### Background Art

People today are highly interested in leisure activities. Accordingly, they are also highly interested in leisure sports.

Bicycle riding, in-line skating, etc., are most popular representative leisure sports.

Among them, bicycle riding is receiving popularity from many people irrespective of men and women, the old and the young, and seasons until now from former days. Further, bicycle riding does not only play a role of a transportation vehicle, but also enables people to enjoy an exercising effect simultaneously. Thus, it is expected that the popularity of the bicycle riding will be kept continuously.

Here, bicycles are diversified in view of kinds and functions according to user's usage from general bicycles to mountain bicycles.

That is, various kinds and transforms of equipment for leisure sports are required according to a modem life that is changing variously and quickly.

For this, this applicant developed a shaking bicycle that can double interest and momentum by changing form and composition of a general bicycle, and gained a Korean Patent Registration No. 10-0583013 (see also corresponding prior art document WO-A-2006046823) for an eccentricity device that is essential to embody the shaking bicycle.

As can be seen from this, the eccentricity device is mounted on a wheel of a bicycle, to thereby help position of a wheel eccentric around a drive shaft.

Accordingly, the wheel may be located at the center around the drive shaft, or may be eccentric from the drive shaft according to user's manipulation of the bicycle, to thus make the wheel eccentrically rotate and to thereby make a rider feel a ride comfort ascending and descending from surface of the ground.

### Disclosure of Invention

### Technical Problem

However, the eccentricity device for the conventional shaking bicycle has the following problems.

First, a manufacturing process is difficult because of complicated composition, and a production cost increases due to an increase in man power during production.

That is, since a screw and plural uneven portions are formed in a rotating frame and a circular shape control member respectively, and a latch is configured in the con- ventional art, a production cost is high.

Second, as described above, since the rotating frame and the circular shape control member are combined with each other using a screw, and the uneven portions that have been engaged with each other secede from each other according to loosening of the screw coupling, the composition and method are very complicated and burdensome.

### Solution to Problem

To solve the above problems of the conventional art, it is an object of the present invention to provide a central axis variable device for varying the central axis of a wheel, which simplifies a configuration of the variable device to thereby reduce a production cost and which controls an eccentricity position of the wheel conveniently and accurately step by step.

To accomplish the object of the present invention, there is provided a variable device for varying the central axis of a wheel, the central axis variable device comprising:
a rotating body along the inner circumference of which a first uneven portion is formed and both sides of which are pierced with respect to each other;
a first cap that is combined at one side of the rotating body, and on the eccentric portion of which an eccentricity hole is formed;
a second cap along the outer circumference of which a second uneven portion is formed in correspondence to the first uneven portion to thus be combined at the other side of the rotating body, and on which a shaft tube that is inserted into the eccentricity hole is formed;
wherein a coupling hole is formed at the first cap, an engagement hole corresponding to the coupling hole is formed at the second cap, and a coupling member passes through the coupling hole and the engagement hole and couples the first and second caps with each other, wherein a bent piece is formed inwards from the rotating body along the border of one side of the rotating body; wherein a separation preventive member is detachably formed in the inner surface of the first cap, and that interferes with the bent piece to thus prevent the rotating body and the first cap from being separated from each other;
wherein a step groove is stepped toward the engagement hole and that is formed at the side of the second cap; and
wherein an interference protrusion has an elastic force to come in and out toward the step groove and is formed in the inner side of the second cap,
wherein the coupling member comprises a head portion on which a plurality of grooves are formed so that the interference protrusion is arranged into one of the plurality of grooves, and wherein a thread portion is extended from the head portion and is exposed through the coupling hole of the first cap to then be engaged by a nut.

Preferably but not necessarily, the central axis variable device further comprises an interference unit that is formed in the rotating body and the first cap in order to interfere with free rotation of the rotating body.

Preferably but not necessarily, the central axis variable device further comprises a bent piece that is formed inwards from the rotating body along the border of one side of the rotating body, wherein the interference unit comprises: an interference groove that is formed at a position corresponding to each recess portion of the first uneven portion in the bent piece; and a leaf spring that is elastically supported on the inner surface of the first cap and is inserted into the interference groove.

Preferably but not necessarily, a separation preventive member is detachably formed in the inner surface of the first cap, and interferes with the bent piece, to thus prevent the rotating body and the first cap from being separated from each other.

Preferably but not necessarily, the central axis variable device further comprises a spring that elastically supports the inner surface of the first cap and the inner surface of the second cap with respect to each other, between the inner surface of the first cap and the inner surface of the second cap.

Preferably but not necessarily, a disc unit that can constrain power of a bicycle is provided at the outside of the second cap.

### Advantageous Effects of Invention

The central axis variable device according to the present invention has the following effects.

First, a composition of the central axis variable device is simplified and a production cost thereof is reduced. In addition, a series of processes that control eccentricity position of a wheel is simple.

Second, a coupling member that couples first and second caps includes a head portion on which a plurality of grooves are formed. An interference protrusion that is elastically provided into the plurality of grooves in the second cap, to thereby maximize a coupling force of the coupling member.

Third, a leaf spring is inserted in an interference groove formed in a rotating body, and is elastically supported on the inner surface of the first cap, to thereby interfere with free rotation of the rotating body.

That is, a flow of the rotating body is prevented to thus provide a temporary assembly state. Accordingly, the present invention provides an effect of exactly guiding the position of the rotating body with which the second cap is combined.

Fourth, since a separation preventive member that interferes with bent piece of the rotating body is detachably formed in the inner surface of the first cap, there is an effect that the first cap is not easily detached from the rotating body.

Fifth, since a spring that elastically supports the inner surface of the first cap and the inner surface of the second cap with respect to each other, is provided between the inner surface of the first cap and the inner surface of the second cap, there is an effect of making the second cap pushed out evenly by the elastic force of the spring in a process that the second cap is pushed out from the rotating body when a coupling force of a coupling member is loosened.

Accordingly, since the corresponding positions in the rotating body and the second cap are not loose, they can be reunited smoothly.

### Brief Description of Drawings

The above and other objects and advantages of the present invention will become more apparent by describing the preferred embodiment thereof in detail with reference to the accompanying drawings in which:
Figure 1 is a side view showing a state where a central axis variable device of a wheel according to a preferred embodiment of the present invention is placed on a tail gear wheel of a bicycle;
Figure 2 is an exploded perspective view showing a disjointed state of a central axis variable device of a wheel according to a preferred embodiment of this invention;
Figure 3a shows left-hand, lateral and right-hand views of a rotating body of a central axis variable device of a wheel according to a preferred embodiment of this invention;
Figure 3b shows left-hand, lateral and right-hand views of a first cap of a central axis variable device of a wheel according to a preferred embodiment of this invention;
Figure 3c shows left-hand, lateral and right-hand views of a second cap of a central axis variable device of a wheel according to a preferred embodiment of this invention;
Figure 4 is a perspective view showing a coupling member of a central axis variable device of a wheel according to a preferred embodiment of this invention;
Figures 5a and 5b are a cross-sectional view showing tightening and loosening of a first cap and a second cap of a central axis variable device of a wheel according to a preferred embodiment of this invention; and
Figure 6 is a perspective view showing a coupled state of a central axis variable device of a wheel according to a preferred embodiment of this invention.

### Mode for the Invention

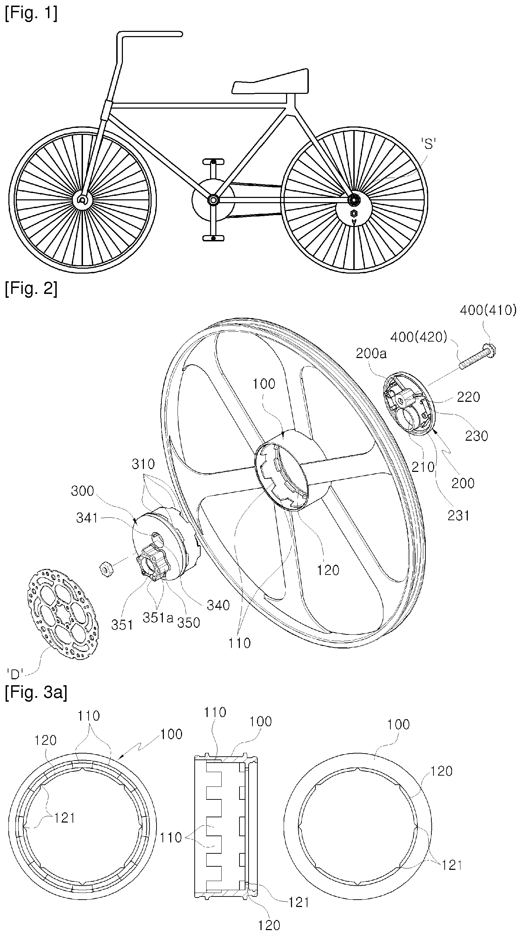

Hereinbelow, a variable device for varying the central axis of a wheel (hereinafter referred to as a variable device) according to a preferred embodiment of the present invention will be described with reference to the accompanying drawings, that is, Figures 1 to 6.

For convenience of explanation, an example that a variable device according to this invention is placed on a bicycle will be described below.

However, the variable device according to the present invention can be placed to all devices that are driven by a wheel or wheels, for example, a motorcycle etc., as well as a bicycle, and can be applied to all wheels without being limited to a front wheel or a rear wheel.

Figure 1 is a side view showing a state where a central axis variable device of a wheel according to a preferred embodiment of the present invention is placed on a tail gear wheel of a bicycle.

Here, the variable device controls a distance difference about distance between a central axis being a drive shaft "S" of a bicycle and the outer circumferential surface of a rear wheel of the bicycle, to thus play a role of making the rear wheel with respect to the ground roll uniformly or travel eccentrically.

That is, since a distance difference is kept between a drive shaft "S" and the outer circumferential surface that contacts the ground of a rear wheel, position of the drive shaft "S" around the center of the rear wheel is kept eccentric to thus vary a rolling function of the rear wheel.

Since the function of the above-described variable device is disclosed in the Korean Patent Registration No. 10-0583013, the detailed description thereof will be omitted.

Hereinbelow, composition and function of the variable device according to a preferred embodiment of this invention will be described with reference to Figures 2 through 6.

As illustrated in Figure 2, the variable device includes a rotating body 100, a first cap 200, a second cap 300 and a coupling member 400.

A rear wheel is mounted in the rotating body 100. A rim including a plurality of spokes are provided on the outer circumferential surface of the rotating body 100.

Here, the rotating body 100 is formed in a cylindrical shape, and both sides of the rotating body 100 is provided in a perforating state.

Here, a plurality of uneven portions are formed along the circumference of the inner circumferential surface of the rotating body 100.

Here, the uneven portions formed on the rotating body 100 are called a first uneven portion 110 for convenience of explanation.

Here, intervals between the uneven portions in the first uneven portion 110 are equally formed, and the concave and convex portions in the first uneven portion 110 are preferably formed eight in number, respectively.

Accordingly, the rotating body 100 may be rotated by one-eighth rounds step by step, and a binding force of the rotating body 100 may be further strengthened due to a coupling with a second uneven portion to be later described.

As illustrated in Figure 3a, a bent piece 120 is formed along the border of one side of the rotating body 100.

The bent piece 120 prevents the first cap 200 from being easily detached from the rotating body 100 by a separation preventive member to be described later. The detailed description of the bent piece 120 will follow.

Here, the bent piece 120 is formed inwards from the rotating body 100 along the border of one side of the rotating body 100.

As can be seen from Figure 3a, a plurality of interference grooves 121 are formed along the circumference of the bent piece 120.

The interference grooves 121 guide a correct position at the time of a mutual coupling between the rotating body 100 and the second cap 300. A leaf spring to be described later is disposed on the interference grooves 121, thereby preventing free rotation of the rotating body 100 and thus making a coupling of the second cap 300 easily performed.

Here, the interference grooves 121 are formed at the positions corresponding to the concave portions of the first uneven portion formed in the rotating body 100, respectively.

The first cap 200 is formed at one side of the variable device, and is combined at one side of the rotating body 100.

An eccentricity hole 210 and a coupling hole 220 are formed at the first cap 200, which communicate with an inner side of the rotating body 100.

A shaft tube 320 for coupling the drive shaft "S" of a bicycle passes through the eccentricity hole 210. The eccentricity hole 210 is formed at a position eccentric from the center of the first cap 200.

The coupling member 400 that combines the first cap 200 and the second cap 300 at both sides of the rotating body 100 passes through a coupling hole 220.

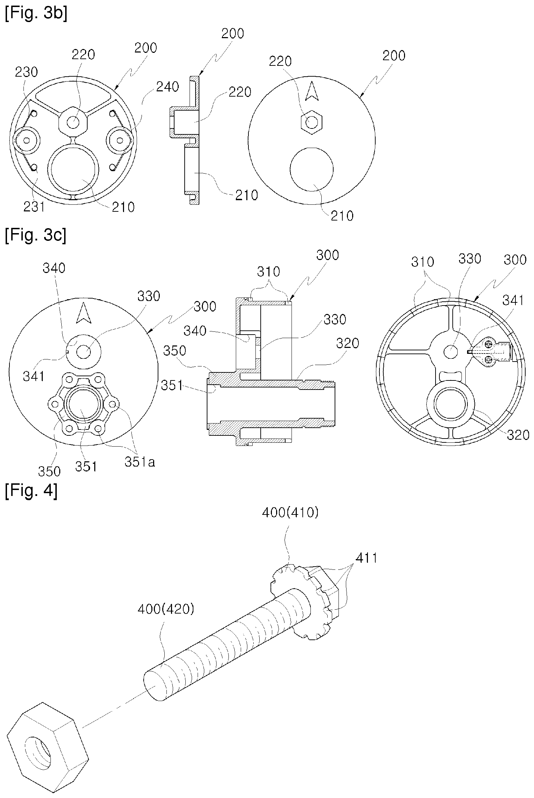

Meanwhile, as shown in Figure 3b, leaf springs 230 that are elastically supported are provided at the inner surface of the first cap 200.

Each leaf spring 230 interfere with the rotating body 100 so that the rotating body 100 does not freely rotate on the first cap 200, and is inserted into a corresponding interference groove 121 of the rotating body 100.

That is, the center of the leaf spring 230 is inserted into the interference groove 121 so that rotation of the rotating body 100 is interfered. Accordingly, position of the second cap 300 can be guided correctly as a technological characteristic of the present invention.

The leaf springs 230 are mounted to be opposite each other on the inner surface of the first cap 200.

Here, both ends of each leaf spring 230 are preferably placed on a pair of supports 231

Here, the center of each leaf spring 230 is preferably bent in a form corresponding to the interference groove 121 of the rotating body 100.

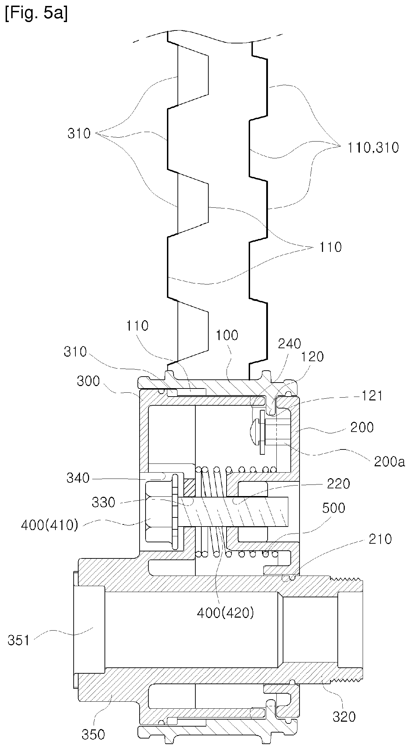

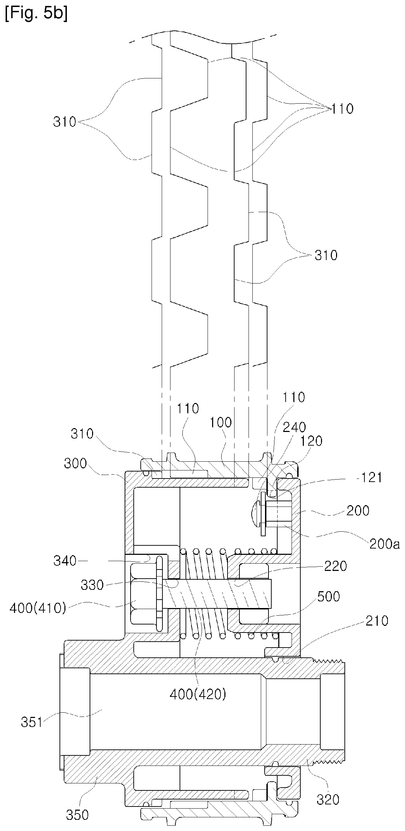

Meanwhile, an engagement boss 200a of Figure 5a or 5b is formed on the inner surface of the first cap 200, and a separation preventive member 240 is detachably combined with the engagement boss 200a.

The separation preventive member 240 prevents the first cap 200 from being separated from the rotating body 100.

In more detail, even at a state where the first cap 200 is not coupled by the coupling member 400, the first cap 200 is caught by the bent piece 120 of the rotating body 100 to thus avoid the first cap 200 from being detached from the rotating body 100.

For this, the engagement boss 200a is preferably formed between the supports 231, and the separation preventive member 240 is made in a form of interfering the bent piece 120 of the rotating body 100 at a state of being combined with the engagement boss 200a.

Next, the second cap 300 is combined with the other side of the rotating body 100, in order to form the variable device of the present invention. A second uneven portion 310 is formed along the circumference of the outer circumferential surface of the second cap 300.

The second uneven portion 310 corresponds to the first uneven portion 110 of the rotating body 100, and the number of the respective concave and convex portions of the second uneven portion 310 is eight as in the case of the first uneven portion 110.

The shaft tube 320 with which the drive shaft "S" of a bicycle is coupled and an engagement hole 330 through which the coupling member 400 is coupled are formed on the second cap 300.

The shaft tube 320 is extended from the inner surface of the second cap 300, and is exposed to the outside through the eccentricity hole 210.

In addition, the coupling member 400 passes through the engagement hole 330, and the engagement hole 330 corresponds to the coupling hole 220.

Here, the engagement hole 330 is perforated to the outside of the second cap 300. A step groove 340 that is formed with a step by the engagement hole 330 is formed at the outer surface of the second cap 300.

A head portion of a coupling member 400 to be described later is arranged in the step groove 340.

Here, as illustrated in Figure 3c, an interference projection 341 that is projected toward the step groove 340, is provided in the step groove 340.

The interference protrusion 341 interferes with the head portion of the coupling member 400, to thereby prevent a coupling force of the coupling member 400 from being loosened.

The interference protrusion 341 is provided at the inner side of the second cap 300 to have an elastic force, and can come in and out with the elastic force toward the step groove 340.

Meanwhile, a disc unit "D" is placed as a brake unit on the outer side of the second cap 300.

That is, as illustrated in Figures 2 through 6, a disc unit "D" is placed as a brake unit in the variable device according to this invention.

For this, a mounting protrusion 350 on which the disc unit "D" is placed is further formed on the outer surface of the second cap 300.

A throughhole 351 that communicates with the inner portion of the shaft tube 320 is formed in the mounting protrusion 350. A plurality of screw holes 351a through which the disc unit "D" is screw-coupled are formed on the circumference of the throughhole 351.

Next, the coupling elements 400 plays a role of combining the first cap 200 and the second cap 300 with each other at both sides of the rotating body 100, and includes a head portion 410 and a thread portion 420.

The head portion 410 is arranged in the step groove 340 of the second cap 300, and the thread part 420 is exposed into the coupling hole 220 of the first cap 200 through the engagement hole 330.

Here, as illustrated in Figure 4, a plurality of grooves 411 are formed along the circumference of the head portion 410.

The grooves 411 are regions through the interference protrusion 341 that comes in and out from the step groove 340 is arranged. If the interference protrusion 341 is arranged into one of the grooves 411, the head portion 410 does not rotate. As a result, the coupling member 400 does not loosen.

In addition, the thread portion 420 is extended from the head portion 410, and is exposed through the coupling hole 220 of the first cap 200, to then be engaged by a nut.

Meanwhile, a spring 500 is provided in the inner side of the rotating body 100, and both end portions of the spring 500 elastically supports the inner surface of the first cap 200 and the second cap 300, respectively.

The spring 500 makes the second uneven portion 310 of the second cap 300 not lean to either side thereof but be pushed out evenly in a process of separating the second uneven portion 310 of the second cap 300 from the first uneven portion 110 of the rotating body 100 to make the rotating body 100 rotate.

Hereinbelow, coupling and action of the variable device constructed above will be described.

First, the first cap 200 is combined at one side of the rotating body 100.

Here, the center of the leaf spring 230 mounted on the inner surface of the first cap 200 is inserted into the interference groove 121 that is formed in the bent piece 120 of the rotating body 100.

Accordingly, the rotating body 100 does not freely rotate by interference of the leaf spring 230.

Then, the separation preventive member 240 is combined with the engagement boss of the first cap 200.

Here, as illustrated in Figures 5a and 5b, the separation preventive member 240 interferes with the bent piece 120 of the rotating body 100, thereby preventing the first cap 200 from being detached from the rotating body 100 even before the first cap 200 is coupled by the coupling member 400.

This state can be seen as a temporary assembly of the first cap 200 with respect to the rotating body 100.

Next, the spring 500 is arranged in the inner side of the first cap 200 and then the first cap 200 is covered with the second cap 300. Then, the second cap 300 is combined at the other side of the rotating body 100.

Here, the second cap 300 is arranged at the other side of the rotating body 100 while having an elastic force.

Next, the coupling member 400 is made to pass through the engagement hole 330 of the second cap 300 and the coupling hole 220 of the first cap 200 and then is engaged by a nut.

Here, the head portion 410 of the coupling member 400 is arranged in the step groove 340, and an interference protrusion 341 is arranged in one of the grooves 411 of the head portion 410, to thereby prevent the coupling member 400 from loosening.

Here, a special tool for turning the head portion 410 is used to turn the coupling member 400. A socket wrench (not shown) is used as the special tool.

That is, the interference protrusion 341 that is withdrawn into the step groove 340 is pushed out into the inner side of the second cap 300 by the socket wrench, in a process of inserting the socket wrench into the step groove 340.

Accordingly, the head portion 410 is turned using the socket wrench, to thereby tighten or loosen the coupling member 400.

Thereafter, if tightening or loosening of the coupling member 400 is ended, the socket wrench is separated from the head portion 410.

Here, the interference protrusion 341 is inserted into one of the grooves 411 of the head portion 410 by a restoring force, to thereby prevent the coupling member 400 from loosening.

Then, the disc unit "D" that is a brake unit is combined with the mounting protrusion 350.

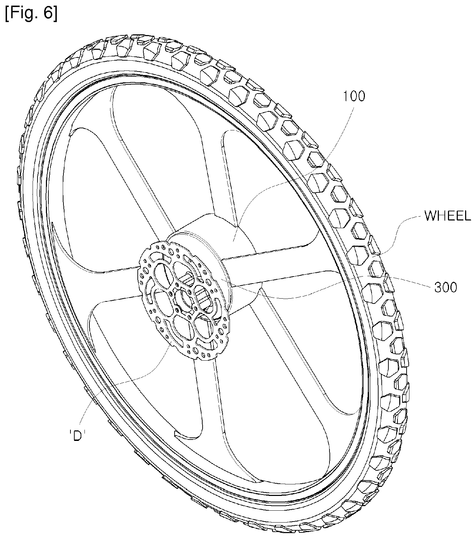

As illustrated in Figure 6, the disc unit "D" is made to correspond to screw holes 351a of the mounting protrusion 350, and then is combined with the mounting protrusion 350, using special bolts and so on.

As described above, the coupling of the variable device is completed.

Meanwhile, section of the combined variable device as described above is illustrated in Figure 5a.

In this state, in order to make position of the rear wheel eccentric around the drive shaft "S" or the eccentric rear wheel restored into a correct position, the first uneven portion 110 and the second uneven portion 310 are uncoupled with each other and then the rotating body 100 is made to rotate.

For this, the coupling member 400 is loosened so that the coupling force of the first cap 200 and the second cap 300 decreases slowly.

Here, the second cap 300 starts to be pushed out evenly from the rotating body 100 by the elastic force of the spring that has supported the first cap 200 and the second cap 300.

Accordingly, engagement of the first uneven portion 110 and the second uneven portion 310 is released, to thereby enable the rotating body 100 to rotate as illustrated in Figure 5b.

Here, since the concave and convex portions in the first uneven portion 110 and the second uneven portion 310 are formed eight in number, respectively, the rotating body 100 may be rotated by one-eighth rounds at a time.

Here, since the rotating body 100 is elastically supported by the leaf spring 230, it is not rotated excessively.

That is, since the interference groove 121 formed in the bent piece 120 of the rotating body 100 is shifted one by one, while holding the leaf spring 230, the rotating body 100 can rotate step by step.

Thus, as the rotating body 100 rotates step by step, position of the rear wheel mounted on the rotating body 100 is also variable around the drive shaft "S."

That is, since the rotating body 100 is variable around the drive shaft "S," that is, position of rear wheel is variable eccentrically, a rolling action of the rear wheel with respect to the ground is made irregularly.

As described above, the wheel central axis variable device according to the present invention can be made into a simple composition to thus reduce a production cost. Further, an eccentricity position of the rotating body can be simply varied.

### Industrial Applicability

As described above, a central axis variable device for varying the central axis of a wheel according to the present invention can be applied in a leisure sports field using a variety of bicycles from a general bicycle to a mountain bicycle.

## Claims

1. A central axis variable device for varying the central axis of a wheel, the central axis variable device comprising:
a rotating body (100) along the inner circumference of which a first uneven portion (110) is formed and both sides of which are pierced with respect to each other;
a first cap (200) that is combined at one side of the rotating body (100); a second cap (300) along the outer circumference of which a second uneven portion (310) is formed in correspondence to the first uneven portion (110) to thus be combined at the other side of the rotating body (100), and on which a shaft tube (320) is formed;
**characterized in that** an eccentricity hole (210) is formed on an eccentric portion of the first cap (200);
that the shaft tube (320) is inserted into the eccentricity hole (210);
that a coupling hole (220) is formed at the first cap (200), an engagement hole (330) corresponding to the coupling hole (220) is formed at the second cap (300), and that a coupling member (400) passes through the coupling hole (220) and the engagement hole (330) and couples the first and second caps (200, 300) with each other,
that a bent piece (120) is formed inwards from the rotating body (100) along the border of one side of the rotating body (100);
that a separation preventive member (240) is detachably formed in the inner surface of the first cap (200), and that interferes with the bent piece (120), to thus prevent the rotating body (100) and the first cap (200) from being separated from each other;
that a step groove (340) is stepped toward the engagement hole (330) and is formed at the side of the second cap (300); and
that an interference protrusion (341) has an elastic force to come in and out toward the step groove (340) and is formed in the inner side of the second cap (300),
wherein the coupling member (400) comprises a head portion (410) on which a plurality of grooves (411) are formed so that the interference protrusion (341) is arranged into one of the plurality of grooves (411), and that a thread portion (420) is extended from the head portion (410), and is exposed through the coupling hole (220) of the first cap (200), to then be engaged by a nut.

2. The central axis variable device according to claim 1, further comprising an interference unit that is formed in the rotating body (100) and the first cap (200) in order to interfere with free rotation of the rotating body (100).

3. The central axis variable device according to claim 2, wherein the interference unit comprises:
an interference groove (121) that is formed at a position corresponding to each recess portion of the first uneven portion (110) in the bent piece (120); and
a leaf spring (230) that is elastically supported on the inner surface of the first cap (200) and is inserted into the interference groove (121).

4. The central axis variable device according to any one of claims 1 to 3, further comprising a spring (500) that elastically supports the inner surface of the first cap (200) and the inner surface of the second cap (300) with respect to each other, between the inner surface of the first cap (200) and the inner surface of the second cap (300).

5. The central axis variable device according to any one of claims 1 to 3, wherein a disc unit (D) that can constrain power of a bicycle is provided at the outside of the second cap (300).

## Patentansprüche

1. Mittelachsenveränderungsvorrichtung zum Verändern der Mittelachse eines Rades, wobei die Mittelachsenveränderungsvorrichtung Folgendes umfasst:
einen Drehkörper (100), an dessen innerem Umfang entlang ein erster unregelmäßiger Abschnitt (110) gebildet ist und dessen beide Seiten im Verhältnis zueinander durchbohrt sind;
eine erste Kappe (200), die auf einer Seite des Drehkörpers (100) kombiniert ist;
eine zweite Kappe (300), an deren äußerem Umfang entlang ein zweiter unregelmäßiger Abschnitt (310) in Übereinstimmung mit dem ersten unregelmäßigen Abschnitt (110) gebildet ist, um somit auf der anderen Seite des Drehkörpers (100) kombiniert zu sein, und auf der ein Stielrohr (320) gebildet ist;
**dadurch gekennzeichnet,**
**dass** ein Exzenterloch (210) auf einem exzentrischen Abschnitt der ersten Kappe (200) gebildet ist;
**dass** das Stielrohr (320) in das Exzenterloch (210) eingefügt wird;
**dass** ein Kopplungsloch (220) an der ersten Kappe (200) gebildet ist, ein Eingriffsloch (330), das dem Kopplungsloch (220) entspricht, an der zweiten Kappe (300) gebildet ist, und dass ein Kopplungselement (400) durch das Kopplungsloch (220) und das Eingriffsloch (330) geht und die ersten und zweiten Kappen (200, 300) miteinander koppelt,
**dass** ein gebogenes Stück (120) von dem Drehkörper (100) aus nach innen entlang der Grenze einer Seite des Drehkörpers (100) gebildet ist;
**dass** ein Trennungsverhinderungselement (240) in der inneren Oberfläche der ersten Kappe (200) abnehmbar gebildet ist und mit dem gebogenen Stück (120) interferiert, um dadurch zu verhindern, dass sich der Drehkörper (100) und die erste Kappe (200) voneinander trennen;
**dass** eine Stufennut (340) in Richtung auf das Eingriffsloch (330) abgestuft ist und auf der Seite der zweiten Kappe (300) gebildet ist; und
**dass** ein Interferenzvorsprung (341) eine elastische Kraft aufweist, um in Richtung auf die Stufennut (340) ein- und auszutreten und in der inneren Seite der zweiten Kappe (300) gebildet ist,
wobei das Kopplungselement (400) einen Kopfabschnitt (410) umfasst, auf dem eine Vielzahl von Nuten (411) derart gebildet ist, dass der Interferenzvorsprung (341) in einer der Vielzahl von Nuten (411) angeordnet ist, und dass sich ein Gewindeabschnitt (420)von dem Kopfabschnitt (410) aus erstreckt und durch das Kopplungsloch (220) der ersten Kappe (200) hindurch freigelegt ist, um dann durch eine Nut in Eingriff gebracht zu werden.

2. Mittelachsenveränderungsvorrichtung nach Anspruch 1, ferner umfassend eine Interferenzeinheit, die in dem Drehkörper (100) und der ersten Kappe (200) gebildet ist, um mit der freien Drehung des Drehkörpers (100) zu interferieren.

3. Mittelachsenveränderungsvorrichtung nach Anspruch 2, wobei die Interferenzeinheit Folgendes umfasst:
eine Interferenznut (121), die in einer Position gebildet ist, die jedem Vertiefungsabschnitt des ersten unregelmäßigen Abschnitts (110) in dem gebogenen Stück (120) entspricht; und
eine Blattfeder (230), die auf der inneren Oberfläche der ersten Kappe (200) elastisch getragen ist und in die Interferenznut (121) eingefügt ist.

4. Mittelachsenveränderungsvorrichtung nach einem der Ansprüche 1 bis 3, ferner umfassend eine Feder (500), welche die innere Oberfläche der ersten Kappe (200) und die innere Oberfläche der zweiten Kappe (300) im Verhältnis zueinander zwischen der inneren Oberfläche der ersten Kappe (200) und der inneren Oberfläche der zweiten Kappe (300) elastisch trägt.

5. Mittelachsenveränderungsvorrichtung nach einem der Ansprüche 1 bis 3, wobei eine Scheibeneinheit (D), welche die Energie eines Fahrrads einschränken kann, auf der Außenseite der zweiten Kappe (300) bereitgestellt wird.

## Revendications

1. Dispositif variable d'axe central pour varier l'axe central d'une roue, le dispositif variable d'axe central comprenant :
un corps tournant (100) le long du pourtour intérieur duquel une première partie irrégulière (110) est formée et dont les deux côtés sont percés l'un par rapport à l'autre ;
un premier capuchon (200) qui est monté sur un côté du corps tournant (100) ;
un second capuchon (300) le long du pourtour extérieur duquel une seconde partie irrégulière (310) est formée de façon à correspondre à la première partie irrégulière (110) afin d'être ainsi monté sur l'autre côté du corps tournant (100), et sur lequel un manchon d'arbre (320) est formé ;
**caractérisé en ce qu'**un trou excentrique (210) est formé sur une partie excentrique du premier capuchon (200) ;
**en ce que** le manchon d'arbre (320) est inséré dans le trou excentrique (210) ;
**en ce qu'**un trou d'accouplement (220) est formé sur le premier capuchon (200) et **en ce qu'**un trou d'engagement (330) correspondant au trou d'accouplement (220) est formé sur le second capuchon (300) et **en ce qu'**un élément d'accouplement (400) passe par le trou d'accouplement (220) et le trou d'engagement (330) et accouple les premier et second capuchons (200, 300) l'un à l'autre,
**en ce qu'**une pièce recourbée (120) est formée vers l'intérieur à partir du corps tournant (100) le long du bord d'un côté du corps tournant (100) ;
**en ce qu'**un élément d'empêchement de séparation (240), qui interagit avec la pièce recourbée (120), est formé de façon détachable sur la surface intérieure du premier capuchon (200), de façon à empêcher ainsi le corps tournant (100) et le premier capuchon (200) d'être séparés l'un de l'autre ;
**en ce qu'**une rainure d'étagement (340) est étagée vers le trou d'engagement (330) et est formée sur le côté du second capuchon (300) ; et
**en ce qu'**une saillie d'interaction (341) présente une force élastique pour entrer et sortir vers la rainure d'étagement (340) et est formée sur le côté intérieur du second capuchon (300),
l'élément d'accouplement (400) comprenant une partie de tête (410) sur laquelle une pluralité de rainures (411) est formée de façon que la saillie d'interaction (341) soit située dans une de la pluralité de rainures (411) et qu'une partie filetée (420) soit étendue à partir de la partie de tête (410) et soit exposée par le trou d'accouplement (220) du premier capuchon (200) et soit ensuite engagée dans un écrou.

2. Dispositif variable d'axe central selon la revendication 1, comprenant en outre une unité d'interférence qui est formée dans le corps tournant (100) et le premier capuchon (200) afin d'interférer avec la rotation libre du corps tournant (100).

3. Dispositif variable d'axe central selon la revendication 2, comprenant en ce que l'unité d'interférence comprend :
une rainure d'interférence (121) qui est formée dans une position correspondant à chaque partie en retrait de la première partie irrégulière (110) dans la pièce recourbée (120), et
un ressort à lame (230) qui est monté de façon élastique sur la surface intérieure du premier capuchon (200) et est inséré dans la rainure d'interférence (121).

4. Dispositif variable d'axe central selon l'une des revendications 1 à 3, comprenant en outre un ressort (500) entre la surface intérieure du premier capuchon (200) et la surface intérieure du second capuchon (300), qui supporte de façon élastique la surface intérieure du premier capuchon (200) et la surface intérieure du second capuchon (300) l'une par rapport à l'autre.

5. Dispositif variable d'axe central selon l'une des revendications 1 à 3, dans lequel une unité de disque (D) qui peut limiter la puissance d'une bicyclette, est présente sur le côté extérieur du second capuchon (300).
